# EUROPÄISCHE PATENTSCHRIFT

(11) **EP 0 745 494 B1**
(45) Veröffentlichungstag und Bekanntmachung des Hinweises auf die Patenterteilung: **10.02.1999**
(21) Anmeldenummer: 95117984.5
(22) Anmeldetag: 15.11.1995
(51) Int. Cl.: B60C 27/04

(54) **Gleitschutz für Fahrzeugräder**
Traction device for car wheels
Dispositif anti-dérapant pour roues de véhicules

(30) Priorität: 02.06.1995 DE 19519729
(43) Veröffentlichungstag der Anmeldung: 04.12.1996
(73) Patentinhaber: Confon AG, CH-9424 Rheineck (CH)
(72) Erfinder: Preusker, Werner, D-88605 Sauldorf (DE)
(74) Vertreter: Richter, Joachim, Dipl.-Ing.

(56) Entgegenhaltungen:
- EP-A- 0 119 878
- CA-A- 962 177
- FR-A- 2 639 882
- GB-A- 2 030 939
- US-A- 1 822 748
- US-A- 1 977 900
- US-A- 2 174 345
- US-A- 2 900 004
- US-A- 4 834 158
- PATENT ABSTRACTS OF JAPAN vol. 010, no. 081 (M-465), 29.März 1986 & JP-A-60 222305 (TAKANORI SATOU), 6.November 1985,

## Beschreibung

Die Erfindung betrifft einen Gleitschutz für Fahrzeugräder gemäß dem Oberbegriff des Patentanspruches 1.

Ein solcher Gleitschutz ist durch die US-A-1,822,748 bekannt. Bei diesem Gleitschutz sind die Bügel einendseitig an einer ringförmigen, eine Haltefunktion für die Bügel ausübenden Stützvorrichtung in der Weise befestigt, daß die Bügel mit endseitig ausgebildeten Ösen auf die ringförmige Stützvorrichtung aufgeschoben sind. Mit ihren anderen freien bogenförmig ausgebildeten Enden umgreifen die Bügel die Reifenlauffläche und erhalten somit ihren Halt. Die Bügel und die Stützvorrichtung zusammen bilden kein einziges einstückiges Teil. Auch sind die Bügel an der Stützvorrichtung nicht so weit drehfest oder drehmindernd gehalten, daß ein Verschwenken der einzelnen Bügel eine Spannung in der Stützvorrichtung erzeugt, die den Bügel wieder zur Reifenlauffläche zurückverschwenken läßt.

Bei der Gleitschutzvorrichtung nach der FR-A-2 639 882 sind zwei parallel verlaufende und auf der Reifenlauffläche anliegende Ketten über Stege im Abstand voneinander gehalten, wobei einige Stege mit armartigen seitlich am Rand anliegenden Abschnitten versehen sind, die an einem ringförmigen Stützelement gehalten sind. Die Reifenlauffläche übergreifende Bügel sind bei dieser Gleitschutzvorrichtung nicht vorgesehen.

Die Gleitschutzvorrichtung nach der US-A-4,834,158 ist als Auffahrhilfe ausgebildet und umfaßt eine Anzahl von paarweise zusammengefaßten, in Richtung zur Reifenlauffläche spreizend auseinander gehenden Bügel, die die Reifenlauffläche übergreifen, wobei je zwei Bügel im Bereich der Reifenlauffläche mittels eines Steges in einem festen Abstand gehalten werden. Die Bügel sind mit ihren zusammengeführten Enden an einer scheibenförmigen aufblasbaren Stützvorrichtung befestigt.

Die Gleitschutzvorrichtung nach der US-A- 2 900 004 umfaßt eine Anzahl von die Reifenlauffläche übergreifenden Bügeln, die mittels einer schnapperartigen Einrichtung an einer ringscheibenartigen Stützvorrichtung verschiebbar gehalten sind.

Die Anfahrhilfe oder Gleitschutz nach der EP-A- 119 878 besteht aus einem um die Lauffläche des Reifens gelegten, vermittels Klemmsitz auf der Reifenlauffläche gehaltenem Band mit Abschnitten aus parallel zu einander im Abstand voneinander gehaltenen Stäben, auf die stollenartige Elemente mit abgewinkelten Abschnitten derart aufgeschoben sind, daß die abgewinkelten Abschnitte wechselseitig an den Seitenflächen des Reifens anliegen. Bügelförmige, die Reifenlauffläche übergreifende Elemente sind bei diesem Gleitschutz nicht vorgesehen.

Aufgabe der Erfindung ist es, einen Gleitschutz der eingangs genannten Art so zu verbessern, daß bei einfacher Konstruktion und Handhabung ein ausreichender Halt am Fahrzeugrad ohne Befestigung an der Radfelge und ein selbsttätiges Zurückschwenken der Bügel zur Reifenlauffläche ermöglicht wird.

Diese Aufgabe wird durch die in dem Patentanspruch 1 gekennzeichneten Merkmale gelöst.

Nach einer Ausführungsform der Erfindung bilden die Bügel und die Stützvorrichtung zusammen ein einziges, einstückiges Teil. Die Bügel sind an der aus einem elastisch verformbaren sich jeweils bei einer äußeren Krafteinwirkung in die Kreisform zurückfedernden Ring oder aus einer ringförmigen Scheibe bestehenden Stützvorrichtung angeformt, wobei die Stützvorrichtung bei begrenzter Elastizität eine solche hohe Eigen- und Formstabilität besitzt, daß jeder Bügel in beiden radialen Richtungen elastisch gehalten ist und die Bügel an der Stützvorrichtung so angeformt sind, daß ein Verschwenken nach außen oder in tangentialer Richtung eines Bügels eine Spannung in der Stützvorrichtung erzeugt, die den Bügel wieder zur Reifenlauffläche zurückverschwenkt.

Des weiteren sind zwischen den Bügeln zumindest im Bereich der Reifenlauffläche Gleitschutzsegmente, insbesondere Kettenabschnitte, Kunststoffplatten, Kettennetze und/oder Kunststoffnetze, befestigt. Die Bügel, die Stützvorrichtung und die Gleitschutzsegmente bilden zusammen ein einziges, einstückiges Teil. Die Bügel sind an der aus einem elastisch verformbaren sich jeweils bei einer äußeren Krafteinwirkung in die Kreisform zurückfedernden Ring oder aus einer ringförmigen Scheibe bestehenden Stützvorrichtung nur in radialer Richtung bewegbar fest angeformt, wobei die Stützvorrichtung bei begrenzter Elastizität eine solche hohe Eigen- und Formstabilität besitzt, daß jeder Bügel in beiden radialen Richtungen elastisch gehalten ist.

Ein solcher Gleitschutz läßt eine einfache und schnelle Montage während des Stands des Fahrzeuges zu, ohne nach einem Anfahren und erneutem Stillstand des Fahrzeuges den Gleitschutz noch einmal nachspannen zu müssen. An der Radfelge brauchen keine Teile für die Führung oder die Befestigung des Gleitschutzes befestigt zu werden; sondern der Gleitschutz findet selber ausreichend Halt am Kraftfahrzeugreifen.

Für den Halt des Gleitschutzes spielt eine besondere Rolle die außenseitig liegende Stützvorrichtung in Form eines Ringes oder einer Scheibe, die dafür sorgt, daß die Bügel ausreichend locker auf dem Reifen liegen und dennoch von dem Reifen nicht abgleiten oder abfallen können. Diese seitliche Stützvorrichtung bringt jeden Bügel immer wieder in die optimale mittlere Lage aufgrund seiner ausreichenden Eigenstabilität. Die Stützvorrichtung gelangt nach einem Verbiegen durch einen der Bügel radial nach außen oder radial nach innen immer wieder in die stabile Mittellage aufgrund der eigenen Rückstellkräfte. Dies geschieht z.B. dadurch, daß die Stützvorrichtung aus einem geschlossenen Ring besteht, der bei keiner äußeren Krafteinwirkung etwa kreisförmig ist. Sobald einer der an diesem Ring angeformten Bügel eine radiale Kraft nach innen oder nach außen auf den Ring ausübt, so gibt der Ring etwas nach, aber während des Nachgebens führt diese elastische Verformung des Ringes zu einem Aufbau einer Kraft, die den Ring dazu veranlaßt, den Bügel wieder in seine Normalstellung zurückzuziehen bzw. zurückzudrücken, sobald die Drehstellung des Kraftfahrzeugrades dieses zuläßt.

Die Befestigung der Haltebügel an der Stützvorrichtung hat damit eine doppelte Funktion: die Stützvorrichtung sorgt dafür, daß die Haltebügel immer wieder ihre Normalstellung einnehmen, so daß die Stützvorrichtung die Bügel hält. Zum anderen halten aber auch die Bügel die Stützvorrichtung in ihrer seitlichen Lage, so daß die Stützvorrichtung einer zusätzlichen Befestigung oder Führung nicht bedarf. Es kommt damit zu einer idealen gegenseitigen Stützung, Führung und Kraftübertragung zwischen der Stützvorrichtung und den Bügeln, ohne zu Zwängungen zu führen. Es wird damit nicht nur ein optimaler Griff auf der Straße bzw. auf dem rutschigen Untergrund, sondern auch ein geringer Verschleiß erreicht. Ferner weist der Gleitschutz bei einfacher Herstellung, Konstruktion und Montage ein geringes Gewicht auf und kann platzsparend verstaut und verpackt werden.

Die Haltemittel, die dafür sorgen, daß der Gleitschutz nicht zur Radaußenseite hin abrutscht, können unterschiedlicher Art sein. Es genügt, wenn die Bügel auf der der Stützvorrichtung abgewandten Seite so weit verlängert sind, daß sie die innere Reifenflanke zumindest teilweise insbesondere bogenförmig übergreifen. Alternativ oder zusätzlich können aber auch die Bügel mit einem flexiblen Ring verbunden sein. Ferner wird hierfür alternativ oder zusätzlich vorgeschlagen, daß das Haltemittel einen Kettenring aufweist, der die Bügel miteinander verbindet.

Weitere vorteilhafte Ausgestaltungen der Erfindung sind in den weiteren Unteransprüchen aufgeführt.

Ausführungsbeispiele der Erfindung sind in den Zeichnungen dargestellt und werden im folgenden näher beschrieben. Es zeigen:
- Fig. 1: einen axialen Schnitt durch ein Kraftfahrzeugrad mit aufgesetztem Gleitschutz,
- Fig. 2: eine Seitenansicht des Kraftfahrzeugrades nach Fig. 1, jedoch mit zwischen den Bügeln angeordneten kettenartigen Gleitschutzsegmenten,
- Fig. 3: eine Draufsicht eines verstellbaren Bügels,
- Fig. 4: eine Seitenansicht einer verstellbaren Stützvorrichtung in einem Ausschnitt, und
- Fig. 5: eine Draufsicht auf die Reifenlauffläche mit den Bügel und den Gleitschutzsegmenten.

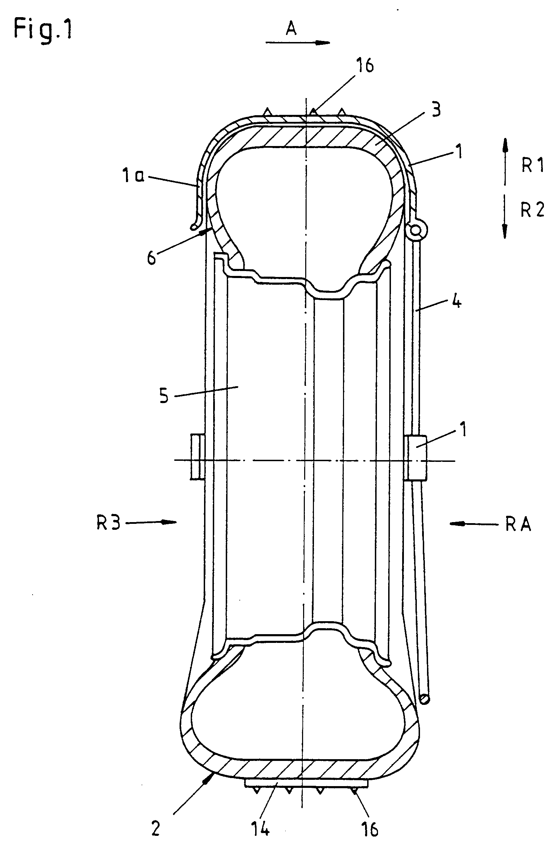

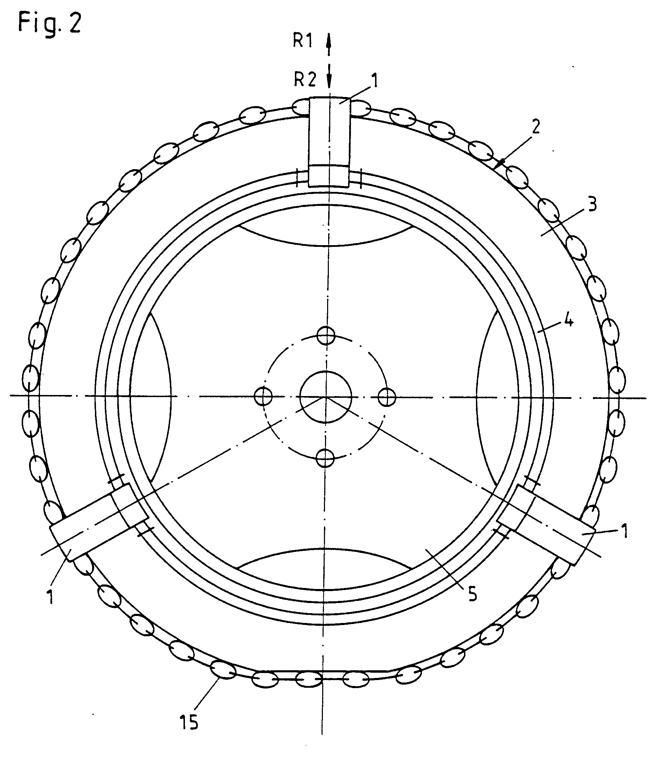

Im Ausführungsbeispiel nach den Fig. 1 und 2 sind drei oder mehr als Greifelemente bzw. Gleitschutz wirkende insbesondere Spikes 16 und/oder andere Erhebungen aufweisende Bügel 1 in gleichem Drehwinkel gleichmäßig verteilt über die Lauffläche 2 eines Kraftfahrzeugreifens 3 angeordnet.

Das Kraftfahrzeug kann ein PKW, Lastwagen, Bus oder Baufahrzeug sein. Die im Querschnitt U-förmigen Bügel 1 bestehen vorzugsweise aus Kunststoff (z.B. Polyurethan oder Polyethylan) und sind an einer Stützvorrichtung 4 angeformt, die an der Radaußenseite RA neben der Felge 5 angeordnet ist. In diesem Ausführungsbeispiel ist die Stützvorrichtung 4 kreisförmig ausgebildet, die bei einer äußeren Kraftanwendung sich stets in die Kreisform zurückstellt, wie dies in Fig. 2 dargestellt ist. Die Stützvorrichtung 4 hält somit alle Bügel auf der Lauffläche 2 fest und umgekehrt bilden die Bügel 1 einen lagernden Halt für die Stützvorrichtung 4, die darüber hinaus an keinem anderen Teil insbesondere nicht an der Felge befestigt ist. Es besteht damit nur eine Verbindung der Stützvorrichtung 4 zu den Bügeln 1 und möglicherweise noch zu weiteren Gleitschutzmitteln, wie Gleitschutzsegmenten 15 in Form von Kettenabschnitten, Netzen, Platten oder ähnlichem.

Im Ausführungsbeispiel nach den Fig. 1 und 2 sind die Bügel 1 an der Stützvorrichtung 4 angeformt, so daß die Stützvorrichtung 4 dafür sorgt, daß bei einem Nachaußendrehen oder Nachaußenklappen der Bügel 1 diese wieder zurückgeschwenkt werden.

Ein Abrutschen, insbesondere ein Nachaußenschwenken der Bügel 1, kann zusätzlich oder alternativ auch dadurch verhindert werden, daß die inneren freien Enden 1a der Bügel 1 die innere Reifenflanke soweit insbesondere bogenförmig übergreifen, daß ein ausreichender Halt gegen eine Bewegung des Bügels in Richtung A gegeben ist. Zusätzlich oder alternativ kann aber auch hierfür ein Haltemittel in Form eines nicht dargestellten elastischen Ringes vorgesehen sein, der auf der Lauffläche liegt und dort alle Bügel 1 miteinander verbindet. Ferner kann als Haltemittel auch ein Kettenring (15) auf der Lauffläche vorgesehen sein, der wiederum alle Bügel verbindet.

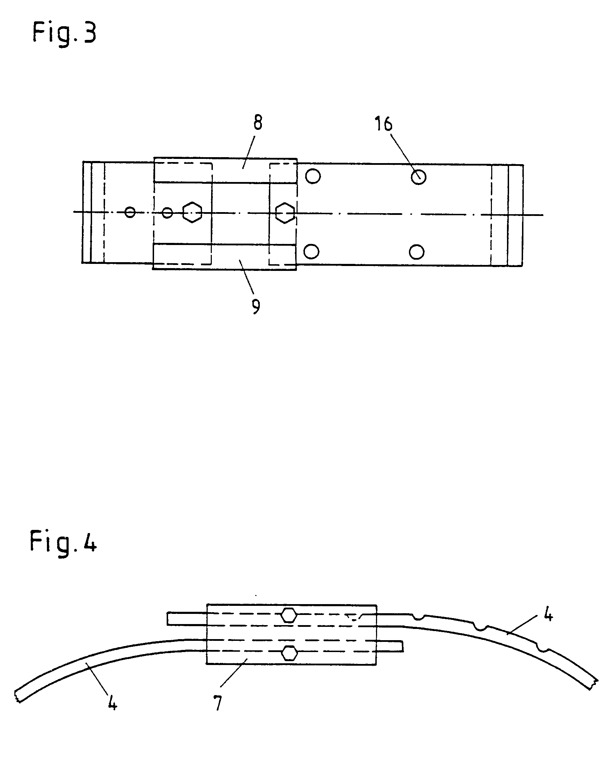

Die Stützvorrichtung 4 kann in ihrem Umfang und Durchmesser entsprechend Fig. 4 dadurch verändert werden, daß die beiden Enden des Ringes einander überlappen und durch eine Schelle oder Klemmvorrichtung 7 aneinander verstellbar befestigt sind. Damit kann der Gleitschutz an unterschiedliche Reifendurchmesser angepaßt werden.

Die Länge der Bügel 1 ist im Bereich der Reifenlauffläche nach Fig. 3 verstellbar, indem der Bügel zweigeteilt ist und zwischen den beiden Teilen sich Verbindungsteile 8, 9 befinden, die durch festklemmende Schrauben verstellbar sind.

Die Stützvorrichtung 4 kann auch vollständig geschlossen sein.

Alle Bügel sind einstückig mit der Stützvorrichtung 4 ausgeführt, wobei die Stützvorrichtung ring- oder scheibenförmig ist.

Im Ausführungsbeispiel nach Fig. 2 befinden sich zwischen den Bügeln 1 im Bereich der Lauffläche Gleitschutzsegmente 15 unterschiedlichster Art, insbesondere Kettenabschnitte, Kettennetze, Kunststoffnetze und/oder Kunststoffplatten. Diese Gleitschutzteile oder -segmente können aber auch fehlen. In diesem Fall sind mindestens drei Bügel insbesondere vier, fünf oder sechs Bügel auf dem Reifen angeordnet.

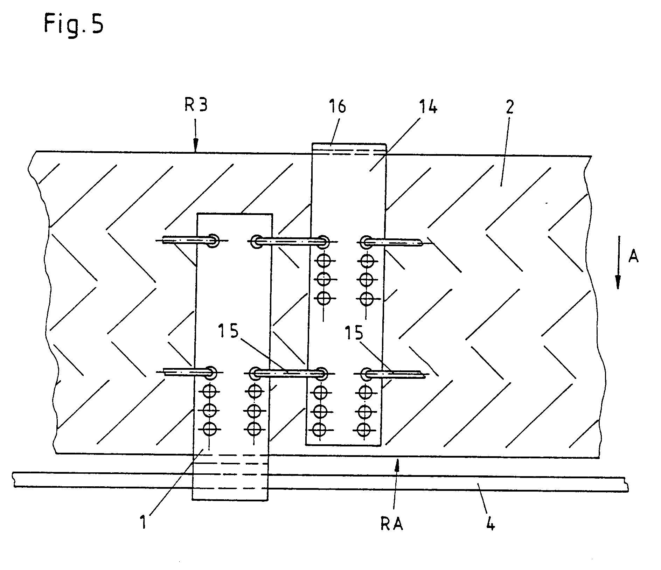

Die Stützvorrichtung 4 und die Bügel 1 können aus den unterschiedlichsten Materialien insbesondere aus Kunststoff oder Metall sein.
Im Ausführungsbeispiel nach Fig. 5 ist neben dem Bügel 1 ein ähnlich geformtes Teil 14 als Gleitschutzelement (Gleitschutzplatte) parallel gelegt, das die innere Reifenflanke mit einem Bereich 1b übergreift, statt der inneren Verlängerung 1a des Bügels. Damit sorgt das Element 14 dafür, daß der Gleitschutz nicht nach außen abrutscht. Zwischen den Teilen 1 und 14 befinden sich verbindende Kettenglieder insbesondere Doppelhaken oder sonstige verbindende Teile.

## Patentansprüche

1. Gleitschutz für Fahrzeugräder mit in regelmäßigen Abständen über den Reifen (3) verteilten Bügeln (1), die die Reifenlauffläche (2) übergreifen und an einer an der Radaußenseite (RA) angeordneten Stützvorrichtung (4, 4a) befestigt sind, wobei die ring- oder scheibenförmige Stützvorrichtung (4, 4a) nur von den Bügeln (1) oder nur von den Bügeln und von Gleitschutzmitteln gehalten ist, die Stützvorrichtung (4, 4a) bei begrenzter Elastizität eine solch hohe Eigen- und Formstabilität besitzt, daß jeder Bügel (1) in beiden radialen Richtungen (R1, R2) elastisch gehalten ist, die Bügel (1) gegen ein Abrutschen nach außen (A) durch Haltemittel (1a) gesichert sind,
dadurch gekennzeichnet,
daß die Bügel (1) und die Stützvorrichtung (4) zusammen ein einziges, einstückiges Teil bilden.

2. Gleitschutz nach Anspruch 1,
dadurch gekennzeichnet,
daß zwischen den Bügeln (1) zumindest im Bereich der Reifenlauffläche (2) Gleitschutzsegmente (15), insbesondere Kettenabschnitte, Kunststoffplatten, Kettennetze und/oder Kunststoffnetze, befestigt sind.

3. Gleitschutz nach Anspruch 2,
dadurch gekennzeichnet,
daß die Bügel (1), die Stützvorrichtung (4) und die Gleitschutzsegmente (15) zusammen ein einziges, einstückiges Teil bilden.

4. Gleitschutz nach einem der Ansprüche 1 bis 3,
dadurch gekennzeichnet,
daß das Haltemittel eine Verlängerung (1a) des Bügels und/oder eines auf der Reifenlauffläche liegenden Gleitschutzelementes (15) ist, die die Reifeninnenseite, insbesondere die Reifenflanke (6), zumindest teilweise übergreift.

5. Gleitschutz nach einem der Ansprüche 1 bis 4,
dadurch gekennzeichnet,
daß das Haltemittel einen Ring aufweist, der die Bügel (1), insbesondere im Bereich der Reifenlauffläche (2) und/oder nahe der inneren Reifenflanke miteinander verbindet.

6. Gleitschutz nach einem der Ansprüche 1 bis 5,
dadurch gekennzeichnet,
daß das Haltemittel einen Kettenring aufweist, der die Bügel (1) insbesondere im Bereich der Reifenlauffläche (2) und/oder nahe der inneren Reifenflanke miteinander verbindet.

7. Gleitschutz nach Anspruch 2,
dadurch gekennzeichnet,
daß die Gleitschutzsegmente (15) in Reifenumlaufrichtung längenverstellbar sind.

8. Gleitschutz nach einem der Ansprüche 1 bis 7,
dadurch gekennzeichnet,
daß die Stützvorrichtung (4) in ihrem Umfang verstellbar ist.

9. Gleitschutz nach einem der Ansprüche 1 bis 8,
dadurch gekennzeichnet,
daß je nach Reifenbreite das auf der Reifenlauffläche liegende Teil der Bügel (1) verstellbar ist.

10. Gleitschutz nach einem der Ansprüche 1 bis 9,
dadurch gekennzeichnet,
daß die Bügel (1) Aufnahmen für die Gleitschutzsegmente (15) und/oder für Spikes aufweisen.

11. Gleitschutz nach einem der Ansprüche 1 bis 10,
dadurch gekennzeichnet,
daß die Bügel (1) ein Profil aufweisen.

12. Gleitschutz nach einem der Ansprüche 1 bis 11,
dadurch gekennzeichnet,
daß die Stützvorrichtung (4) und die Bügel aus Metall oder Kunststoff bestehen.

13. Gleitschutz nach Anspruch 2,
dadurch gekennzeichnet,
daß ein Gleitschutzsegment (14) insbesondere eine Kunststoffplatte und/oder ein getrennter Teil des Bügels den Reifen innenseitig übergreift.

14. Gleitschutz nach einem der Ansprüche 1 bis 13,
dadurch gekennzeichnet,
daß zwei Bügel (1) oder mehrere Bügel auf der Reifenlauffläche liegen.

## Claims

1. Traction device for car wheels with stirrups (1) distributed at regular intervals over the tyre (3), which engage over the tyre tread (2) and are secured to a supporting means (4, 4a) disposed on the wheel exterior (RA), the annular or disk-like supporting means (4, 4a) being retained solely by the stirrups (1) or only by the stirrups and the traction devices, the supporting means (4, 4a), with a limited elasticity, possessing such a high degree of inherent and dimensional stability that each stirrup (1) is elastically retained in both radial directions (R1, R2), the stirrups (1) being safetied against an outward slipping (A) with the aid of retaining means (1a),
**characterized in that**
the stirrups (1) and the supporting means (49) together form a single one-piece component.

2. Traction device for car wheels according to Claim 1,
**characterized in that**,
between the stirrups (1), at least within the area of the tyre tread (2), traction device segments (15), more particularly chain sections, plastic plates, chain nets and/or plastic nets are attached.

3. Traction device according to Claim 2,
**characterized in that**
the stirrups (1), the supporting means (4) and the traction device segments (15) together form a single one-piece component.

4. Traction device according to any of Claims 1 to 3,
**characterized in that**
the retaining means is an extension (1a) of the stirrup and/or of a traction device element (15) lying on the tyre tread, which engages over the tyre inside, more particularly the tyre flank (6) at least in part.

5. Traction device according to any of Claims 1 to 4,
**characterized in that**
the retaining means possesses a ring, which interconnects the stirrups (1), especially within the area of the tyre tread (2) and/or close to the internal tyre flank.

6. Traction device according to any of Claims 1 to 5,
**characterized in that**
the retaining means possesses a chain ring, which interconnects the stirrups (1), especially within the area of the tyre tread (2) and or close to the internal tyre flank.

7. Traction device according to Claim 2,
**characterized in that**
the traction device segments (15) are longitudinally adjustable in the rotational direction of the tyre.

8. Traction device according to any of Claims 1 to 7,
**characterized in that**
the supporting means (4) is circumferentially adjustable.

9. Traction device according to any of Claims 1 to 8,
**characterized in that**,
dependent upon the tyre width, the part of the stirrup (1) lying upon the tyre tread is adjustable.

10. Traction device according to any of Claims 1 to 9,
**characterized in that**
the stirrups (1) possess accommodations spaces for the traction device segments (15) and/or for spikes.

11. Traction device according to any of Claims 1 to 10,
**characterized in that**
the stirrups (1) are provided with a contour pattern.

12. Traction device according to any of Claims 1 to 11,
**characterized in that**
the supporting means (4) and the stirrups are comprised of metal or of plastic.

13. Traction device according to Claim 2,
**characterized in that**
a traction device segment (14), more particularly a plastic plate and/or a separate part of the stirrup engages over the tyre on the inside.

14. Traction device according to any of Claims 1 to 13,
**characterized in that**
two stirrups (1) or a plurality of stirrups lie op the tyre tread.

## Revendications

1. Dispositif antidérapant pour roues de véhicules avec des étriers (1), répartis à des espaces réguliers sur le pneu (3), qui enveloppent la chape du pneu (2) et qui sont fixés sur un dispositif d'appui (4, 4a) placé sur le côté extérieur de la roue (RA), le dispositif d'appui en forme d'anneau ou de disque (4, 4a) n'étant maintenu que par les étriers (1) ou que par les étriers et par des moyens antidérapants, le dispositif d'appui (4, 4a) possédant, pour une élasticité limitée, une telle stabilité propre et une telle indéformabilité que chaque étrier (1) est maintenu élastiquement dans les deux sens radiaux (R1, R2), les étriers (1) sont bloqués contre un glissement vers l'extérieur (A) par des moyens de retenue (1a),
caractérisé en ce
que les étriers (1) et le dispositif d'appui (4) forment ensemble une seule pièce en une partie.

2. Dispositif antidérapant selon la revendication 1,
caractérisé en ce
que des segments antidérapants (15), en particulier des sections de chaîne, des plaques de matière plastique, des filets en chaîne et/ou des filets en matière plastique, sont fixés entre les étriers (1) au moins dans la zone de la chape du pneu.

3. Dispositif antidérapant selon la revendication 2,
caractérisé en ce
que les étriers (1), le dispositif d'appui (4) et les segments antidérapants (15) forment ensemble une seule pièce en une seule partie.

4. Dispositif antidérapant selon l'une des revendications 1 à 3,
caractérisé en ce
que le moyen de retenue est un prolongement (1a) de l'étrier et/ou d'un élément antidérapant (15) situé sur la chape du pneu, prolongement qui enveloppe tout au moins partiellement le côté intérieur du pneu, en particulier le flanc du pneu (6).

5. Dispositif antidérapant selon l'une des revendications 1 à 4,
caractérisé en ce
que le moyen de retenue présente un anneau qui relie les étriers (1) l'un à l'autre, en particulier dans la zone de la chape du pneu (2) et/ou près du flanc intérieur du pneu.

6. Dispositif antidérapant selon l'une des revendications 1 à 5,
caractérisé en ce
que le moyen de retenue présente un anneau en chaîne qui relie les étriers (1) l'un à l'autre, en particulier dans la zone de la chape du pneu (2) et/ou près du flanc intérieur du pneu.

7. Dispositif antidérapant selon la revendication 2,
caractérisé en ce
que les segments antidérapants (15) sont de longueur réglable dans le sens de circulation du pneu.

8. Dispositif antidérapant selon l'une des revendications 1 à 7,
caractérisé en ce
que le dispositif d'appui (4) est de circonférence réglable.

9. Dispositif antidérapant selon l'une des revendications 1 à 8,
caractérisé en ce
que la partie des étriers (1) qui se situe sur la chape du pneu est réglable selon la largeur du pneu.

10. Dispositif antidérapant selon l'une des revendications 1 à 9,
caractérisé en ce
que les étriers (1) présentent des logements pour les segments antidérapants (15) et/ou pour des crampons.

11. Dispositif antidérapant selon l'une des revendications 1 à 10,
caractérisé en ce
que les étriers (1) présentent un profil.

12. Dispositif antidérapant selon l'une des revendications 1 à 11,
caractérisé en ce
que le dispositif d'appui (4) et les étriers sont en métal ou en matière plastique.

13. Dispositif antidérapant selon la revendication 2,
caractérisé en ce
qu'un segment antidérapant (14), en particulier une plaque de matière plastique et/ou une partie séparée de l'étrier, enveloppe le pneu sur le côté intérieur.

14. Dispositif antidérapant selon l'une des revendications 1 à 13,
caractérisé en ce
que deux étriers (1) ou plusieurs étriers se situent sur la chape du pneu.
